# EUROPEAN PATENT SPECIFICATION

(11) **EP 2 121 366 B1**
(45) Date of publication and mention of the grant of the patent: **01.01.2014**
(21) Application number: 08712819.5
(22) Date of filing: 18.02.2008
(51) Int. Cl.: B60K 15/035, F16K 24/04, F16K 17/12, F16K 15/02, B60K 15/03

(54) **FUEL TANK VENT ASSEMBLY FOR A VEHICLE FUEL TANK AND FUEL TANK EQUIPPED THEREWITH**
KRAFTSTOFFBEHÄLTERLÜFTUNGSANORDNUNG FÜR EINEN FAHRZEUGKRAFTSTOFFBEHÄLTER UND DAMIT AUSGESTATTETER KRAFTSTOFFBEHÄLTER
ORIFICE DE MISE A L'AIR LIBRE D'UN RESERVOIR A CARBURANT POUR RESERVOIR A CARBURANT DE VEHICULE ET RESERVOIR A CARBURANT EQUIPE DE CELUI-CI

(30) Priority: 27.02.2007 SE 0700494
(43) Date of publication of application: 25.11.2009
(73) Proprietor: Scania CV AB, 151 87 Södertälje (SE)
(72) Inventor: LILJEKVIST, Johan, S-118 47 Stockholm (SE)
(86) International application number: PCT/SE2008/050189
(87) International publication number: WO 2008/105724

(56) References cited:
- WO-A1-2005/100832
- DE-A1- 4 006 465
- JP-A- 8 200 034
- US-A1- 2005 098 160
- US-B1- 6 557 719
- US-B1- 6 557 719

## Description

The present invention relates to a fuel tank vent assembly for a vehicle fuel tank, in particular for a heavy vehicle fuel tank, comprising a housing defining a vent opening, which is provided with a vent membrane permeable for fuel vapour and air for venting the fuel tank.

Vehicle fuel to be supplied to a combustion engine of a vehicle is a highly volatile medium. In particular, when a vehicle fuel tank is filled with liquid fuel at a gas station by means of a typical fuel pump nozzle, fuel vapour above the liquid fuel in the interior of said fuel tank is to be displaced as the fuel level increases. Obviously, this vapour must be vented for the tank to be filed. Moreover, the fuel vapour resulting from an increase of the ambient temperature, in particular at a high ambient temperature level, also has to be vented.

The prior art document US 6,557,719 B1 discloses a fuel tank equipped with a gas evacuation system. The fuel tank includes an opening provided with a fuel vapour and gas permeable membrane, which is supported by means of a grid.

US 2005/0098160 A1 also discloses a fuel vent assembly having a rollover protection in order to avoid a flow-out of fuel when the vehicle is upside down due to an accident.

DE 40 06 465 A1 also discloses a fuel vent assembly for a fuel tank with a corresponding rollover protection.

Further vent assemblies are disclosed by JP 8 200034 A and WO 2005/100 832 A1.

Although, the above described documents disclose a rollover protection and provide a fuel vapour venting function in order to permit an outflow of air and fuel vapour through the preamble membrane, these devices are not adapted to permit discharging of excessive pressure from the fuel tank. However, the occurrence of excessive pressure can lead to damages at the fuel vent assembly, in particular at the membrane.

It is therefore an object of the present invention to provide a fuel tank vent assembly which allows a reliable venting of the fuel tank and which in addition provides a discharge function in case of excessive pressure within the fuel tank.

This object is solved by a fuel tank vent assembly for a vehicle fuel tank, in particular for a heavy vehicle fuel tank, comprising a housing defining a vent opening which is provided with the vent membrane permeable for fuel vapour and air for venting the fuel tank, wherein said fuel tank assembly further comprises a membrane holding element movable between a closed position and a discharge position.

By providing a movable membrane holding element which supports the membrane, it is possible to maintain the membrane in the closed position as long as the pressure within the fuel tank does not exceed a certain pressure limit. In said closed position, the conventional venting function of the fuel tank is provided due to the permeability of the membrane for fuel vapour and air. However, as soon as the pressure within the fuel tank exceeds a certain pressure limit, the membrane holding element is moved to the discharge position due to the high pressure. In said discharge position, the pressure can be discharged quickly by permitting a substantially free outflow of air and fuel vapour from the interior of the fuel tank.

According to the invention, said membrane holding element is held in said closed position by means of magnetic forces. This allows a reliable holding of the membrane holding element in said closed position. Moreover, said housing includes a first stop element defining said closed position of said membrane holding element. Said first stop element is magnetized. Said membrane holding element includes a magnetized region attracted by a complementary magnetic force of said magnetized first stop element.

Said magnetic attraction forces of said membrane holding element and said housing are adapted to permit a movement of said membrane holding element from said closed position to said discharge position, if the pressure within said fuel tank exceeds a predetermined pressure limit. Thus, the membrane holding element is held in its closed position as long as the pressure in the interior of the fuel tank is below the pressure limit. As soon as the pressure within the fuel tank exceeds the pressure limit, e. g. in a situation with a high ambient temperature leading to a substantial pressure increase within the fuel tank, the forces resulting from the pressure increase overcome the magnetic attraction forces. Thus, the membrane holding element is lifted and moved into its discharge position whereby a pressure discharge is permitted.

According to a further embodiment of the invention, said housing includes second stop means defining said discharge position of said membrane holding element and limiting its movement. Thereby, losing the membrane holding element can be prevented.

According to one embodiment of the invention, said membrane holding element is formed as a hollow cylindrical ring supporting said vent membrane. Moreover, said membrane holding element and said housing can abut to one another in a fluid-tight manner in said closed position. Thereby, it can be prevented that fuel flows out of the fuel tank, if the vehicle is upside down due to an accident or if the fuel tank is excessively filled with liquid fuel. It is to be understood that the magnetic attraction forces mentioned above and holding said membrane holding element in its closed position are adapted to maintain this fluid-tight abutment between the membrane holding element and said housing during such situations. This means that the pressure applied to the membrane by liquid fluid, in case the vehicle is upside down or alike, never exceeds the pressure limit for overcoming the magnetic attraction forces.

According to a further embodiment of the invention, said housing is provided with at least one bypass recess surrounding said membrane holding element for discharge purposes, if the latter is in said discharge position. With regard to the membrane, the invention can further provide that said vent membrane is formed from fuel vapour permeable material, e. g. a membrane formed by an acrylic copolymer on nylon or by a polytetrafluoroethane on nylon or by silicone.

The invention further relates to a fuel tank equipped with the fuel tank vent assembly as described above.

In the following one embodiment of the invention is described with regard to the figures, wherein:
- Fig. 1: shows a perspective schematical view of a fuel tank vent assembly according to the invention;
- Fig. 2: shows a cross section through the assembly according to fig. 1 in its closed position, and
- Fig. 3: shows the assembly according to figures 1 and 2 in its opened (discharge) position.

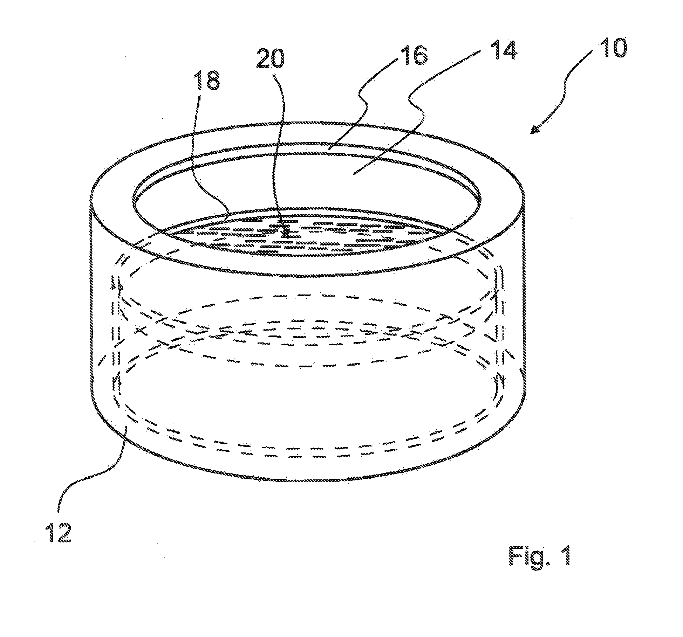

In fig. 1, a fuel tank vent assembly 10 according to the invention is shown in a perspective view. The fuel tank vent assembly 10 includes a housing 12 defining a vent opening 14. The vent opening 14 is restricted by an upper flange 16 formed on the upper end of said cylindrical housing 12. Within the housing 12, a cylindrical membrane holding element 18 is received. The membrane holding element 18 is provided with a tensioned membrane arranged at the upper side of the cylindrical membrane holding element 18.

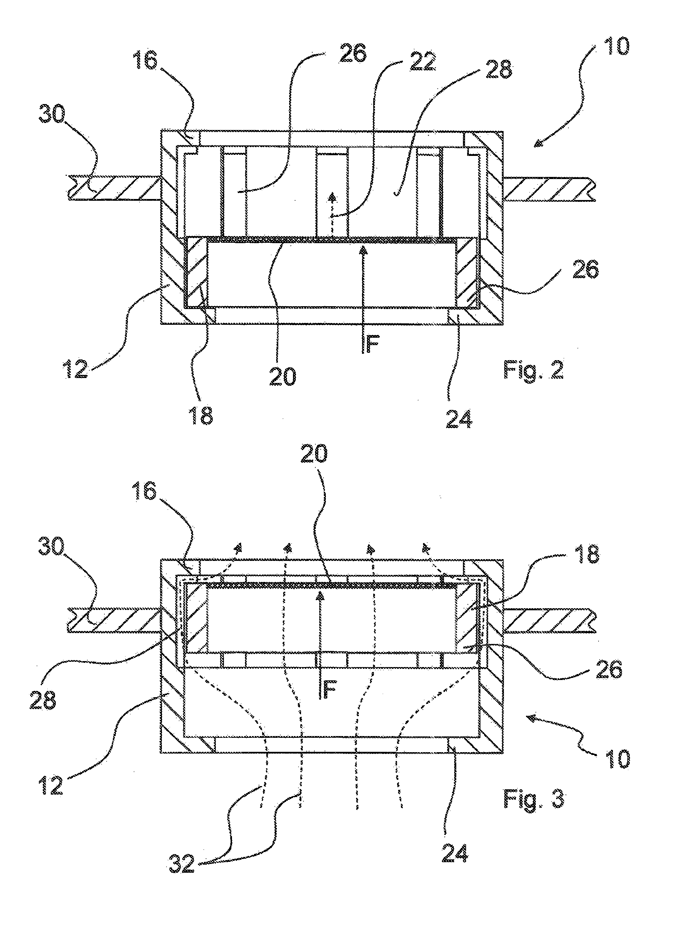

As can be seen in fig. 2, which is a cross section through the fuel tank vent assembly 10 according to fig. 1, the membrane holding element 18 is formed as a cylindrical ring and is movable within the hollow housing 12 in axial direction, as shown by arrow 22. Fig. 2 shows a closed position in which the membrane holding element 18 rests on a lower flange 24 provided at the lower end of the housing 12. This lower flange 24 is magnetized. Moreover, the membrane holding element 18 is magnetized in a corresponding region 26 facing said flange 24. Thus, complementary magnetic attraction forces of the magnetized flange 24 and the lower region of the membrane holding element 18 result in a holding function such that the membrane holding element 18 is held in this closed position, as shown in fig. 2, by the magnetic attraction forces. In this closed position according to fig. 2, the lower abutting surface of the membrane holding element 18 abuts in a fluid-tight manner against the upper abutting surface of the flange 24.

The membrane 20 is formed from a fluid-tight material but is permeable to fuel vapour as well as to air. It is formed, e. g. from a silicone material, a cellulose material, an acrylic copolymer on a nylon, a polytetrafluoroethane on nylon or the like.

Moreover, as can be seen in fig. 2, a plurality of guiding bars 26 are provided on the inner surface of the housing 12 in its upper region. The guiding bars are arranged in a certain distance from one each other. Thereby, between two guiding bars 26 a bypass recess is formed in said housing 12, respectively.

If the fuel tank vent assembly is arranged within a fuel tank wall 30, a pressure prevailing within the fuel tank acts on the membrane 20. This pressure results in a force F acting on the membrane 20. As long as this force F does not exceed the magnetic attraction forces resulting from the magnetized regions 24 and 25, the membrane holding element 18 is held in the closed position as depicted in fig. 2.

However, as soon as force F exceeds these magnetic attraction forces, the membrane holding element 18 is lifted from said flange 24 and moved upwards as shown by arrow 22 in fig. 2. Due to the force F, the membrane holding element 18 takes the discharge position shown in fig. 3. In this discharge position, the membrane holding element 18 is no longer in fluid-tight abutment with the flange 24. Instead it is lifted into abutment with the upper flange 16 of the housing 12. However, due to the bars 26 and recesses 28 arranged therebetween, there is a direct fluidic connection between the interior of the fuel tank and the ambience. Thus, air and fluid vapour depicted with dashed lines 32 can bypass the membrane holding element 18 and can stream from the interior of the fuel tank to the outside. Thereby, an excessive pressure within the interior of the fuel tank can be discharged. As soon as the excessive pressure has been relieved, the force F acting on the membrane decreases. Due to the gravity and the magnetic forces of the magnetized regions 24 and 26, the membrane holding element 18 returns to the closed position according to fig. 2.

The invention provides a fuel tank vent assembly 10 as well as a fuel tank 30 equipped with such a fuel tank vent assembly 10, which guarantee a conventional and efficient venting function through a membrane which is permeable for fuel vapour and air. Moreover, it includes a membrane holding element 26 which is held by magnetic forces in a closed position, wherein the venting function is provided whereas an exit of liquid fuel is prevented, even if the vehicle is in an upside-down-position after an accident. However, in situations of an excessive pressure within the fuel tank, the fuel tank vent assembly 10 according to the invention provides a discharge function, wherein the membrane holding element 18 is moved into said discharge position (fig. 2). In this discharge position, the membrane holding element can be bypassed by out-streaming fuel vapour and air.

## Claims

1. Fuel tank vent assembly (10) for a vehicle fuel tank (30), in particular for a heavy vehicle fuel tank, comprising a housing (12) defining a vent opening (14), which is provided with a vent membrane (20) permeable for fuel vapour and air for venting the fuel tank (30), and a membrane holding element (18) movable between a closed position and a discharge position, **characterized in that** said membrane holding element (18) is held in said closed position by means of magnetic forces, that said housing (12) includes first stop means (24) defining said closed position of said membrane holding element (18), that said first stop means (24) is magnetized, that said membrane holding element (18) includes a magnetized region (26) attracted by a complementary magnetic force of said magnetized first stop element (24) and that said magnetic attraction forces of said membrane holding element (18) and said housing (12) are adapted to permit a movement of said membrane holding element (18) from said closed position to said discharge position, if the pressure within said fuel tank exceeds a predetermined pressure limit.

2. Fuel tank vent assembly (10) according to one of the preceding claims, **characterized in that** said housing (12) includes second stop means (16) defining said discharge position of said membrane holding element (18).

3. Fuel tank vent assembly (10) according to one of the preceding claims, **characterized in that** said membrane holding element (18) is formed as a hollow cylindrical ring supporting said vent membrane (20).

4. Fuel tank vent assembly (10) according to one of the preceding claims, **characterized in that** said membrane holding element (18) and said housing (12) abut to one another in a fluid-tight manner in said closed position.

5. Fuel tank vent assembly (10) according to one of the preceding claims, **characterized in that** said housing (12) is provided with at least one bypass recess (28) surrounding said membrane holding element 18 for discharge purposes if the latter is in said discharge position.

6. Fuel tank vent assembly (10) according to one of the preceding claims, **characterized in that** said vent membrane (20) is formed from fuel vapour permeable material, in particular from an acrylic copolymer on nylon or from a polytetrafluoroethane on nylon or from silicone.

7. Fuel tank equipped with a fuel tank vent assembly (10) according to one of the preceding claims.

## Patentansprüche

1. Kraftstoffbehälterbelüftungsanlage (10) für einen Kraftstoffbehälter eines Kraftfahrzeugs (30), insbesondere für einen Kraftstoffbehälter eines Lastkraftfahrzeugs, umfassend ein Gehäuse (12), welches eine Lüftungsöffnung (14) definiert, die durch eine für Kraftstoffdampf und Luft zur Lüftung des Kraftstoffbehälters (30) durchlässige Lüftungsmembran (20) ausgebildet ist, und einen zwischen einer geschlossenen Stellung und einer Auslassstellung beweglichen Membranhalteelement (18),
**dadurch gekennzeichnet, dass** das Membranhalteelement (18) mittels magnetischer Kräfte in der geschlossenen Stellung gehalten ist, dass das Gehäuse (12) erste Anschlagmittel (24) aufweist, welche die geschlossene Stellung des Membranhalteelements (18) definieren, dass die ersten Anschlagmittel (24) magnetisiert sind, dass das Membranhalteelement (18) einen magnetisierten Bereich (26) aufweist, welcher durch die entgegengesetzte Magnetkraft der ersten Anschlagmittel (24) angezogen wird, und dass die magnetischen Anziehungskräften des Membranhalteelements (18) und des Gehäuses (12) dazu ausgebildet sind, um eine Bewegung des Membranhalteelements (18) aus der geschlossenen Stellung in die Auslassstellung zu ermöglichen, wenn der Druck innerhalb des Kraftstoffbehälters eine vordefinierte Druckgrenze überschreitet.

2. Kraftstoffbehälteranordnung (10) nach einem der vorangehenden Ansprüche, **dadurch gekennzeichnet, dass** das Gehäuse (12) zweite Anschlagmittel umfasst (16), welche die Auslassstellung des Membranhalteelements (18) definieren.

3. Kraftstoffbehälteranordnung (10) nach einem der vorangehenden Ansprüche, **dadurch gekennzeichnet, dass** das Membranhalteelement (18) als ein hohler zylindrischer Ring ausgebildet ist, welcher die Lüftungsmembran (20) trägt.

4. Kraftstoffbehälteranordnung (10) nach einem der vorangehenden Ansprüche, **dadurch gekennzeichnet, dass** das Membranhalteelement (18) und das Gehäuse (12) in der geschlossenen Stellung in einer fluiddichten Weise aneinander angrenzen.

5. Kraftstoffbehälteranordnung (10) nach einem der vorangehenden Ansprüche, **dadurch gekennzeichnet, dass** das Gehäuse (12) mit mindestens einer Bypass-Öffnung (28) ausgebildet ist, welche das Membranhalteelement (18) zu Auslasszwecken umgibt, falls sich dieses in Auslassstellung befindet.

6. Kraftstoffbehälteranordnung (10) nach einem der vorangehenden Ansprüche, **dadurch gekennzeichnet, dass** die Lüftungsmembran (20) aus kraftstoffdampfdurchlässigem Material besteht, insbesondere aus einem Acryl-Copolymer auf Nylon oder aus einem Polytetrafluorethan auf Nylon oder aus Silikon.

7. Kraftstoffbehälter, ausgestattet mit einer Kraftstoffbehälterlüftungsanordnung (10) nach einem der vorangehenden Ansprüche.

## Revendications

1. Ensemble de dégazage de réservoir de carburant (10) pour un réservoir de carburant de véhicule (30), en particulier pour un réservoir de carburant de véhicule lourd, comprenant un boîtier (12) définissant une ouverture de dégazage (14) qui est munie d'une membrane de dégazage (20) perméable à la vapeur de carburant et à l'air pour permettre le dégazage du réservoir de carburant (30), et d'un élément porte-membrane (18) qui peut se déplacer entre une position fermée et une position de décharge, **caractérisé en ce que** ledit élément porte-membrane (18) est maintenu dans ladite position fermée à l'aide de forces magnétiques, que ledit boîtier (12) comprend un premier moyen de butée (24) définissant ladite position fermée dudit élément porte-membrane (18), que ledit premier moyen de butée (24) est aimanté, que ledit élément porte-membrane (18) comprend une région aimantée (26) attirée par une force magnétique complémentaire dudit premier élément de butée aimanté (24), et que lesdites forces d'attraction magnétique dudit élément porte-membrane (18) et dudit boîtier (12) sont aptes à permettre audit élément porte-membrane (18) de passer de ladite position fermée à ladite position de décharge si la pression à l'intérieur dudit réservoir de carburant excède une limite de pression prédéterminée.

2. Ensemble de dégazage de réservoir de carburant (10) selon une des revendications précédentes, **caractérisé en ce que** ledit boîtier (12) comprend un second moyen de butée (16) définissant ladite position de décharge dudit élément porte-membrane (18).

3. Ensemble de dégazage de réservoir de carburant (10) selon une des revendications précédentes, **caractérisé en ce que** ledit élément porte-membrane (18) est formé d'un anneau cylindrique creux qui supporte ladite membrane de dégazage (20).

4. Ensemble de dégazage de réservoir de carburant (10) selon une des revendications précédentes, **caractérisé en ce que** ledit élément porte-membrane (18) et ledit boîtier (12) butent l'un contre l'autre à joint étanche aux fluides dans ladite position fermée.

5. Ensemble de dégazage de réservoir de carburant (10) selon une des revendications précédentes, **caractérisée en ce que** ledit boîtier (12) est muni d'au moins un évidement de dérivation (28) qui entoure ledit élément porte-membrane (18) et sert pour la décharge si cet élément est dans ladite position de décharge.

6. Ensemble de dégazage de réservoir de carburant (10) selon une des revendications précédentes, **caractérisé en ce que** ladite membrane de dégazage (20) est formée d'une matière perméable à la vapeur de carburant, en particulier d'un copolymère acrylique sur nylon ou d'un polytétrafluoréthane sur nylon ou de silicone.

7. Réservoir de carburant équipé d'un ensemble de dégazage de réservoir de carburant (10) selon une des revendications précédentes
